Europäisches Patentamt

European Patent Office

Office européen des brevets

(19)

(11) Numéro de publication: **0 160 604**
**B1**

(12) **FASCICULE DE BREVET EUROPEEN**

(45) Date de publication du fascicule du brevet:
**22.06.88**

(51) Int. Cl.⁴: **C 22 C 24/00, H 01 M 4/40**

(21) Numéro de dépôt: **85400698.8**

(22) Date de dépôt: **09.04.85**

(54) **Alliage ternaire riche en lithium à haut point de fusion, un procédé d'élaboration et une application.**

(30) Priorité: **25.04.84 FR 8406479**

(43) Date de publication de la demande:
**06.11.85 Bulletin 85/45**

(45) Mention de la délivrance du brevet:
**22.06.88 Bulletin 88/25**

(84) Etats contractants désignés:
**DE GB IT**

(56) Documents cités:
**US - A - 4 076 905**
**US - A - 4 110 111**
**US - A - 4 116 780**

**CHEMICAL ABSTRACTS, vol. 91, 1979, page 519, no. 165433k, Columbus, Ohio, US; E.N. PROTASOV et al.: "Electrochemical behavior of lithium-magnesium-aluminum alloys in lithium chloride-potassium chloride and lithium chloride-potassium chloride-cesium chloride melts"**

(73) Titulaire: **AEROSPATIALE Société Nationale Industrielle, 37, Boulevard de Montmorency, F-75781 Paris Cédex 16 (FR)**

(72) Inventeur: **Riffault, Françoise, 51 rue Gabriel Péri, F-92320 Chatillon (FR)**
Inventeur: **Pathe, Claude, 97, rue Gay Lussac, F-92320 Chatillon (FR)**
Inventeur: **Ferrier, Serge, 6bis rue Jean Jaurès, F-91430 Igny (FR)**
Inventeur: **Debattista, Danièle, 15, rue du Rocher, F-91120 Palaiseau (FR)**

(74) Mandataire: **Rinuy, Santarelli, 14, avenue de la Grande Armée, F-75017 Paris (FR)**

# Description

La présente invention concerne un alliage ternaire riche en lithium, de faible masse molaire et à haut point de fusion, ainsi qu'un procédé d'élaboration et une application de ce dernier.

Le lithium est un matériau électrochimiquement très énergétique, et de masse molaire faible. Son bas point de fusion (180 °C) limite toutefois des applications, notamment dans le domaine des générateurs électrochimique à température de fonctionnement élevée.

En vue d'élever ses températures admissibles de fonctionnement, il est connu d'allier le lithium avec un autre métal ou métalloïde. Il a ainsi été proposé notamment:

un alliage binaire lithium-aluminium de «structure β» (point de fusion égal à 720 °C) contenant 20% en masse de lithium, obtenu le plus souvent par voie métallothermique ou électrochimique;

un alliage binaire lithium-silicium contenant 50% en masse de lithium (point de fusion égal à 650 °C), généralement obtenu par métallothermie, et

un alliage binaire lithium-bore contenant de 70 à 80% en masse de lithium.

Ce dernier alliage peut notamment être élaboré par métallothermie à partir de lithium et de bore de structure cristallisée, ainsi que le propose le brevet US N° 4110111 du 29 août 1978. Il est toutefois fait mention dans ce brevet de l'impossibilité d'obtenir un tel alliage à partir de bore amorphe.

On connaît également, d'après le document US-A-4116780, un alliage tenaire lithium-silicium-bore contenant (en poids) de 12 à 61% de lithium et de 35 à 68% de silicium et une teneur de bore entre 4 et 20% en masse.

La présente invention vise un alliage de lithium riche en lithium dont le point de fusion soit supérieur à ceux des alliages précités. Elle vise tout particulièrement un alliage lithium-bore à haut point de fusion, dont l'élaboration puisse se faire à partir de bore à l'état amorphe aussi bien qu'à l'état cristallisé.

L'invention propose ainsi un alliage ternaire riche en lithium, à haut point de fusion, caractérisé en ce que sa teneur en lithium est comprise entre 60% et 90% en masse, et en ce qu'il contient en outre de 9,5% à 38% de bore en masse et un autre métal choisi parmi les métaux alcalino-terreux et le magnesium, à une teneur comprise entre 0,5% et 2% en masse.

Cet autre métal est avantageusement du magnésium; il peut également s'agir d'un alcalino-terreux tel que du calcium.

Un alliage ternaire du type précité, grâce à l'autre métal à faible teneur, est adapté à être élaboré aussi bien à partir de bore amorphe qu'à partir de bore cristallisé.

L'invention préconise que cet alliage soit élaboré grâce à un cycle thermique (préparation par «métallothermie») comportant principalement les trois étapes suivantes:

mise en solution du bore et de l'autre métal dans du lithium liquide formant solvant;

apparition de germes dans le mélange liquide, et

solidification de l'alliage par augmentation de température.

L'invention propose, pour l'élaboration d'un alliage ternaire du type précité, un procédé métallurgique selon lequel, sous atmosphère inerte:

on maintient sous agitation un mélange (lithium-bore amorphe-autre métal) dans les proportions précitées, à une température sensiblement comprise entre 350 et 450 °C jusqu'à la mise en solution complète du bore dans le lithium préalablement amené à l'état liquide;

on augmente la température de ce mélange jusqu'à une valeur sensiblement comprise entre 500 et 570 °C à laquelle le mélange est maintenu sous agitation, en vue de faire apparaitre des germes dans le mélange liquide; et

on augmente la température du mélange d'environ une centaine de degrés, jusqu'à une température sensiblement comprise entre 600 et 700 °C, en sorte de solidifier l'alliage, puis on revient à la température ambiante.

Ces étapes sont avantageusement précédées par un chauffage progressif du mélange après liquéfaction du lithium.

A titre d'exemple, un mélange (lithium-bore-magnésium) à des teneurs en masse de 70%, 29% et 1% respectivement, est placé dans un creuset étanche en acier inoxydable sous atmosphère inerte d'argon puis subit le cycle thermique suivant;

chauffage progressif jusqu'à 400 °C environ pour amener le lithium à l'état liquide;

maintien avec agitation à une température de 400 °C environ, pendant 5 à 8 heures environ, jusqu'à mettre en solution le bore (et l'autre métal) dans le lithium;

chauffage et maintien avec agitation à 550 °C pendant 3 à 5 heures environ;

chauffage puis maintien à une température d'environ 650 °C pendant 2 à 3 heures pour faire précipiter l'alliage métallique, puis

retour à la température ambiante.

On obtient ainsi un alliage de lithium, malléable, dont le point de fusion est de 980 °C, donc supérieur à 950 °C environ. Son potentiel d'oxydation par rapport au couple Li(liq.)/Li$^+$ est de 50 mV à 450 °C.

De par son caractère métallique, un alliage selon l'invention est tout-à-fait adapté à être utilisé comme électrode de générateur électrochimique à température de fonctionnement élevée, notamment comme anode dans des piles thermiques. Il est à noter que de par sa forte proportion en lithium, un alliage selon l'invention a un potentiel de décharge voisin de celui du lithium pur.

L'invention préconise tout particulièrement l'utilisation d'un alliage du type précité comme électrode de générateur électrochimique à électrolyte non aqueux.

## Revendications

1. Alliage ternaire riche en lithium, à haut point de fusion, caractérisé en ce que sa teneur en lithium est comprise entre 60% et 90% en masse, et en ce qu'il contient en outre de 9,5% à 38% de bore en masse et un autre métal choisi parmi les métaux alcalino-terreux et le magnesium à une teneur comprise entre 0,5% et 2% en masse.

2. Alliage selon la revendication 1, caractérisé en ce que l'autre métal est du magnésium.

3. Alliage selon la revendication 1, caractérisé en ce que l'autre métal est un alcalino-terreux du calcium de préférence.

4. Alliage selon la revendication 2, caractérisé en ce qu'il comporte en masse 70% de lithium, 29% de bore et 1% de magnésium.

5. Procédé d'élaboration d'un alliage métallique riche en lithium à haut point de fusion, caractérisé en ce que, sous atmosphère inerte, on maintient sous agitation un mélange ternaire contenant 60% à 90% de lithium en masse, de 9,5% à 38% de bore amorphe en masse et de 0,5% à 2% en masse d'un autre métal, choisi parmi les métaux alcalino-terreux et le magnésium, à une température sensiblement comprise entre 350 et 450 °C jusqu'à mise en solution du bore dans le lithium, préalablement amené à l'état liquide; on augmente la température du mélange jusqu'à une valeur sensiblement comprise entre 500 et 570 °C à laquelle le mélange est maintenu sous agitation jusqu'à l'apparition de germes; et on augmente la température jusqu'à une température sensiblement comprise entre 600 et 700 °C en sorte de solidifier l'alliage puis on revient à la température ambiante.

6. Procédé selon la revendication 5, caractérisé en ce que le mélange est maintenu à 400 °C pendant 5 à 8 heures, à 550 °C pendant 3 à 5 heures et à 650 °C pendant 2 à 3 heures.

7. Procédé selon la revendication 5 ou la revendication 6, caractérisé en ce que l'autre métal est du magnésium.

8. Procédé selon la revendication 5 ou la revendication 6, caractérisé en ce que l'autre métal est un alcalino-terreux, du calcium de préférence.

9. Procédé selon la revendication 8, caractérisé en ce qu'il comporte en masse 70% de lithium, 29% de bore et 1% de magnésium.

10. Application d'un alliage selon l'une quelconque des revendications 1 à 4, comme électrode de générateur électrochimique à électrolyte non aqueux.

## Patentansprüche

1. Hochschmelzende ternäre Legierung mit hohem Lithiumgehalt, dadurch gekennzeichnet, dass ihr Lithiumgehalt zwischen 60 und 90 Gew.-% liegt, und dass sie darüberhinaus 9,5 bis 38 Gew.-% Bor sowie ein anderes Metall mit einem Gehalt von 0,5 bis 2 Gew.-% enthält, das unter den Erdalkalimetallen und Magnesium ausgewählt ist.

2. Legierung nach Anspruch 1, dadurch gekennzeichnet, dass das andere Metall Magnesium ist.

3. Legierung nach Anspruch 1, dadurch gekennzeichnet, dass das andere Metall ein Erdalkalimetall, vorzugsweise Calcium, ist.

4. Legierung nach Anspruch 2, dadurch gekennzeichnet, dass sie 70 Gew.-% Lithium, 29 Gew.-% Bor und 1 Gew.-% Magnesium aufweist.

5. Verfahren zur Herstellung einer hochschmelzenden Legierung mit hohem Lithiumgehalt, dadurch gekennzeichnet, dass in Inertatmosphäre unter Rühren eine ternäre Mischung mit 60 bis 90 Gew.-% Lithium, mit 9,5 bis 38 Gew.-% amorphem Bor und 0,5 bis 2 Gew.-% eines anderen Metalles, das aus den Erdalkalimetallen und Magnesium ausgewählt ist, bei einer Temperatur im wesentlichen zwischen 350 und 450 °C gehalten wird, bis zur Auflösung des Bors im Lithium, das zuvor in den flüssigen Zustand gebracht worden ist, dass die Temperatur der Mischung bis auf einen Wert erhöht wird, der im wesentlichen zwischen 500 und 570 °C erhöht wird, bei welcher Temperatur die Mischung unter Rühren bis zum Auftreten von Kristallkeimen gehalten wird, und dass die Temperatur bis auf eine Temperatur im wesentlichen zwischen 600 und 700 °C erhöht wird, so dass die Legierung sich verfestigt, wonach auf Umgebungstemperatur zurückgegangen wird.

6. Verfahren nach Anspruch 5, dadurch gekennzeichnet, dass die Mischung bei 400 °C während 5 bis 8 Stunden, bei 550 °C während 3 bis 5 Stunden und bei 650 °C während 2 bis 3 Stunden gehalten wird.

7. Verfahren nach Anspruch 5 oder Anspruch 6, dadurch gekennzeichnet, dass das andere Metall Magnesium ist.

8. Verfahren nach Anspruch 5 oder Anspruch 6, dadurch gekennzeichnet, dass das andere Metall ein Erdalkalimetall, vorzugsweise Calcium, ist.

9. Verfahren nach Anspruch 8, gekennzeichnet durch einen Gehalt von 70 Gew.-% Lithium, 29 Gew.-% Bor und 1 Gew.-% Magnesium.

10. Verwendung einer Legierung nach einem der Ansprüche 1 bis 4 als elektrochemische Stromerzeugerelektrode bei wasserfreien Elektrolyten.

## Claims

1. Ternary alloy rich in lithium, with a high melting point, characterized in that its lithium content is between 60% and 90% by weight, and in that it also contains 9.5% to 38% by weight of boron and 0.5% to 2% by weight of another metal chosen from the alkaline earth metals and magnesium.

2. Alloy according to claim 1, characterized in that the other metal is magnesium.

3. Alloy according to claim 1, characterized in that the other metal is an alkaline earth metal, preferably calcium.

4. Alloy according to claim 2, characterized in that it comprises 70% lithium, 29% boron and 1% magnesium by weight.

5. Process for making a metallic alloy rich in lithium, with a high melting point, characterized in that a ternary mixture, containing 60% to 90% by weight of lithium, 9.5% to 38% by weight of amorphous boron and 0.5% to 2% by weight of another metal chosen from the alkaline earth metals and magnesium, is stirred in an inert atmosphere at a temperature essentially between 350 and 450 °C until the boron dissolves in the lithium, previously liquefied; the temperature of the mixture is raised to a value essentially between 500 and 570 °C, at which the mixture is held with stirring until solid nuclei appear; the temperature is then raised to a temperature essentially between 600 and 700 °C so as to solidify the alloy, then it is brought back to ambient temperature.

6. Process according to claim 5, characterized in that the mixture is held at 400 °C for 5 to 8 hours, at 550 °C for 3 to 5 hours and at 650 °C for 2 to 3 hours.

7. Process according to claim 5 or claim 6, characterized in that the other metal is magnesium.

8. Process according to claim 5 or claim 6, characterized in that the other metal is an alkaline earth metal, preferably calcium.

9. Process according to claim 8, characterized in that it comprises 70% lithium, 29% boron and 1% magnesium by weight.

10. Using of an alloy made according to any one of claims 1 to 4 as an electrode in an electrochemical generator with a non-aqueous electrolyte.